# EUROPEAN PATENT APPLICATION

(11) **EP 4 286 222 A1**
(43) Date of publication of application: **06.12.2023**
(21) Application number: 23176216.2
(22) Date of filing: 30.05.2023
(51) Int. Cl.: B60Q 3/62, B60Q 3/78, B60R 13/02, B29C 45/16, B29L 31/30, B29L 11/00

(54) **BACKLIGHTED MULTI-LAYERED INJECTION MOULDED ARTICLE WITH A SEWING-LIKE ASPECT, LIGHTED MULTI-LAYERED INJECTION MOULDED ARTICLE FOR A DECORATIVE MATERIAL, MANUFACTURE PROCESS AND USES THEREOF**

(30) Priority: 30.05.2022 PT 2022118013; 15.09.2022 PT 2022118196
(71) Applicant: CENTITVC - Centro de Nanotecnologia e Materiais Tecnicos, Funcionais e Inteligentes, 4760-034 Vila Nova de Famalicão (PT); CITEVE - Centro Tecnológico das Indústrias Têxtil e do Vestuário de Portugal, 4760-034 Vila Nova de Famalicão (PT); Simoldes Plásticos, SA, Oliveira de Azeméis, 3721-902 Santiago de Riba-UL (PT)
(72) Inventor: RODRIGUES CAMPANHÃ, DANIELA CRISTINA, 4760-034 VILA NOVA DE FAMALICÃO (PT); FERREIRA DIAS, DUARTE NUNO, 4760-034 VILA NOVA DE FAMALICÃO (PT); DURÃES, NELSON, 4760-034 VILA NOVA DE FAMALICÃO (PT); TEIXEIRA, PAULO, 4760-034 VILA NOVA DE FAMALICÃO (PT); MANUEL SILVA, JOÃO, 4760-034 VILA NOVA DE FAMALICÃO (PT); CAMPOS DE OLIVEIRA, CRISTINA MANUELA, 4760-034 VILA NOVA DE FAMALICÃO (PT); MACHADO DE OLIVEIRA, FERNANDO GABRIEL, 4760-034 VILA NOVA DE FAMALICÃO (PT); GONÇALVES DE MOURA, ISABEL, 4760-034 VILA NOVA DE FAMALICÃO (PT); TRINDADE MORGADO RODRIGUES, LÚCIA, 4760-034 VILA NOVA DE FAMALICÃO (PT); DA COSTA FERREIRA, FLÁVIO JORGE, 4760-034 VILA NOVA DE FAMALICÃO (PT); FERREIRA RODRIGUES, FILIPE MIGUEL, 4760-034 VILA NOVA DE FAMALICÃO (PT); DA SILVA COELHO, JOSÉ AGOSTINHO, 3721-902 OLIVEIRA DE AZEMEIS (PT)
(74) Representative: Patentree

(57) **Abstract**

The present disclosure relates to a backlighted multi-layered injection-moulded article with a sewing-like aspect, a lighted multi-layered injection-moulded article for a decorative material, manufacture process and uses thereof.

The backlighted multi-layered injection-moulded article with a sewing-like aspect hereby described comprises an external layer wherein said external layer is perforated, or engraving or translucid to form a light path for diffusing light, at least a light source wherein the light source is selected from a list consisting of electroluminescent yarn/fibre or tape, optical fibre, light-emitting diodes (LEDs) stripe; organic light-emitting diode (OLED) stripe, or combinations thereof and a support layer wherein the material of the support layer is selected from a list consisting of textiles as non-woven, woven or knitted fabrics, foam based on synthetic, natural, natural based or recycled materials or combinations thereof, wherein the previous layers are laminated, and the light source is substantially aligned with the light path for diffusing light in order to form a sewing-like aspect and wherein the laminated layers have been attached to injection-moulding article.

## Description

### TECHNICAL FIELD

The present disclosure relates to a backlighted multi-layered injection-molded article with a sewing-like aspect, a lighted multi-layered injection-moulded article for a decorative material, manufacture process and uses thereof.

### BACKGROUND

The document US 9703029 discloses a method of illuminating a component, having an outer skin layer, the method including the steps of: forming a seam of the outer skin layer; and locating an elongated light conducting medium in the seam.

The document WO 2020/210346 discloses a vehicle including illuminated stitching as a trim on a vehicle interior surface. The method for installing the illuminated stitching includes cutting a continuous channel into the vehicle interior surface. The method also includes installing an illuminated fibre into the channel. The illuminated fibre is at least partially exposed and emits light. The illuminated fibre is secured in the channel to ensure the fibre stays in the channel.

The document GB 2566258 discloses an illuminated vehicle trim, which includes an outer cover, a resiliently compressible spacer layer, and a light source. The outer cover and the spacer layer each have outer and inner surfaces, the outer surface of the spacer layer facing the inner surface of the cover. The light source is operable to direct light through the spacer layer and the cover. The cover may be opaque and perforated and may be made of leather, which may be skived and/or bi-cast. The light source may include a light plate and light guide, with light from a light emitter directed through the light guide, into the light plate and then into the spacer layer. Alternatively, the light emitter may be a light emitting film, e.g. an OLED. The light plate or film may be mounted to a supporting substrate which may be an integral part of the vehicle, e.g. a body panel or dashboard. The trim may be provided as a laminated trim panel. There may also be a light altering interlayer between the spacer layer and the outer cover.

The document US 7934439 discloses a steering wheel comprises a rim connected to spokes. A covering material is provided to enclose at least a portion of the rim and/or the spokes. The covering material includes an outer cover and a light element positioned under the outer cover. The light element is configured to emit light through at least a portion of the outer cover. The light element is positioned over a casing that is provided to give shape to the steering wheel so that a vehicle driver may easily grasp the steering wheel. The light element may provide continuous, pulsed, or non-continuous lighting.

The document US 2002/0101738 discloses an apparatus and method of perforating the cover layer or soft skin of an automotive trim panel such as an instrument panel with a laser to allow light to bleed through the perforations. The light source would preferably be a low heat generating or "cool" type source such as an LED. The light source would be attached to a suitable substrate or incorporated into a flexible printed circuit and coupled to the vehicle electrical system. This method would enable full switch integration to a trim panel and provide a seamless styling opportunity regarding the electrical controls. This method would help reduce cost and weight, improve quality, and promote new seamless styling theme.

The document JP 3181175 discloses a sewn product in a vehicle having a linear light emitting portion, and a flexible linear light emitting tube is attached to the sewn product by piping sewing as a core of piping having a light transmitting portion. A light emitting diode is attached to the end of the linear light emitting tube, and the entire linear light emitting tube emits light by the light emitted from the light emitting diode, and the light emission can be observed from the outside through the light transmitting portion of the piping. The sewn products in this vehicle can be used as seat covers, dash mats, floor mats, steering wheel covers, or curtains for automobiles or trucks.

The document EP 2269797 discloses a decorative or protective appliques' or trim panels having a wide range of decorative patterns may be formed by injection moulding a backing layer behind and a transparent outer layer on the top surface of a thin foil, film, fabric or veneer. Use of multiple layers of decorative film, transparent plastic and coloured/opaque plastic is also disclosed to provide distinguishing visual effects. The appliqués and trim panels may be backlighted or edge-lighted selectively by providing a light source behind or optically coupled to a runner moulded as part of the transparent outer layer.

These facts are disclosed in order to illustrate the technical problem addressed by the present disclosure.

### GENERAL DESCRIPTION

The present disclosure relates to a backlighted multi-layered injection-moulded article with a sewing-like aspect, a lighted multi-layered injection-moulded article for a decorative material, manufacture process and uses thereof.

The subject matter of the invention also provides advantageous properties. In particular for promoting new decorative, functional applications and interior ambience moods to upgrade and customize driver's experience. Functional benefits may include increased levels of safety in night travels, a more efficient space perception of the vehicle interior, or even lighted alerts to get the driver's attention to important situations. In terms of the driver experience, personalization is a crucial advantage that allows the user to adjust the interior design to their own preferences, namely colours and functional effects, depending on the lighting technology. Interior lighting systems in vehicles, like for example cars, are also known to promote great levels of comfort, such as cosy environments, design, such as brand recognition, interior attractiveness, and are related to more luxurious and technological interior spaces with noted benefits for the perceived interior quality of the vehicle. The subject matter hereby disclosed also provides advantageous properties. In particular, in terms of versatility for construction of the backlighted multi-layered injection-moulded article, which provides different methods for incorporation of a light source within or between several/different layers of the said multi-layered injection-moulded article, and providing different aesthetic and/or functional solutions according to each possibility.

The subject matter of the invention also provides advantageous properties in terms of the possibility of working with semi-opaque, opaque or translucent materials of the multi-layered injection-moulded article and combinations thereof, to achieve different decorative and/or functional effects.

The subject matter of the invention also provides advantageous properties in terms of the possibility of working with perforations or engravings and combinations thereof, in selected layers of the multi-layered injection-moulded article, to achieve different decorative and/or functional effects.

This backlighted multi-layered injection-moulded article provides new ambient moods for vehicle interiors and luxury feel for the occupants along with a degree of personalization. Furthermore, the article could also help on the driver attention using "flashing" light sources or dynamics and colour effects using LEDs stripes or other suitable light sources. Interiors ambient lighting are known to have several positive influences in safety of night travels, spatial perception of the vehicle interior and even the generation of important/urgent light alerts to the driver.

The subject matter of the invention also provides advantageous properties in terms of the possibility of lighting effects associated with acoustic feedback for a more differentiated experience.

The lighted multi-layered injection-moulded article for a decorative material provide illuminated features, also known as decorative and functional stitching, for example in vehicle interior components, by means of light-emitting yarn or light-scattering yarn with a coupled light source. The mentioned light source can be a light emitting yarn/tape or a luminous film or panel. The light yarn, which can be either a light emitting yarn or a light-scattering yarn, used in this illumination system can be integrated, for example in vehicle interior components by sewing, embroidery or any other suitable methods, without loss of functional lighting characteristics and increase of a new type of presentation of decorative materials. The light-scattering yarn is connected to a light source or power supply in order to present luminous effect.

For example, in some embodiments of the invention, the lighted multi-layered injection-moulded article can be used in a functionalized way, for example, in a car helping the driver on blind-spot monitoring or satnav instructions, to upgrade interior ambience moods and customize driver's experience, or in electric home appliance helping the user to know whether the appliance is on power or stand-by modes.

Other aspect of the invention, is that in the embodiments with a light source, this light source is integrated within the layers of the multi-layered injection-moulded article, preferably below the sewed and/or embroidered light scattering yarn in order to promote the maximum passage of light from the back to the front of the decorative material.

The light-emitting yarn can themselves focus the light energy and present some proper light for a certain amount of time, without needing a light source. In this case, the light-emitting yarn can be made with phosphorescent, photoluminescent material or their combinations thereof.

In the case of use of a light-emitting yarn, it can be integrated in the external layer or the internal layers of the multilayered injection moulded article. The external layer or layers should include perforations configured to allow the passage of light that will charge the light-emitting yarn, for example during the day.

An aspect of the present disclosure refers to a backlighted multi-layered injection-moulded article with a sewing-like aspect comprising an external layer wherein said external layer is perforated, or engraving or translucid to form a light path for diffusing light; at least a light source wherein the light source is selected from a list consisting of electroluminescent yarn/fibre or tape, optical fibre, light-emitting diodes (LEDs) stripe; organic light-emitting diode (OLED) stripe, or combinations thereof; optionally a support layer wherein the material of the support layer is selected from a list consisting of non-woven fabric, woven fabric; knitted fabric, foam; or combinations thereof; wherein the previous layers are laminated, and the light source is substantially aligned with the light path for diffusing light in order to form a sewing-like aspect; wherein the laminated layers have been attached to injection-moulding article..

An aspect of the present disclosure refers to a backlighted multi-layered injection-moulded article with a sewing-like aspect comprising an external layer wherein said external layer is perforated, or engraving or translucid to form a light path for diffusing light; at least a light source wherein the light source is selected from a list consisting of electroluminescent yarn/fibre or tape or film or panel, optical fibre, light-emitting diodes (LEDs) stripe; organic light-emitting diode (OLED) stripe, quantum dot light-emitting diode stripe or combinations thereof; optionally a support layer wherein the material of the support layer is selected from a list consisting of non-woven fabric, woven fabric; knitted fabric, foam; or combinations thereof; wherein the previous layers are laminated, and the light source is substantially aligned with the light path for diffusing light in order to form a sewing-like aspect and preferably located on the backside of the multi-layered injection-moulded article; wherein the laminated layers have been attached to injection-moulding article; wherein the external layer comprises an overthickness for conduction of the light source. This overthickness on the external layer allows a higher light reflection and increases the lightning capacity of the article.

In an embodiment, backlighted multi-layered injection-moulded article of the present disclosure may further comprise an adhesive layer between the layers.

In an embodiment, backlighted multi-layered injection-moulded article of the present disclosure further comprise a mask layer under the external layer wherein said mask is perforated or engraving or translucid to form an additional light path for guiding the light, wherein all the light paths are substantially aligned for diffusing light.

In an embodiment, the light source is inserted inside a channel, wherein said channel is attached to the mask or to the internal face of the external layer, wherein the channel is perforated or engraving or translucid to form an additional light path for guiding the light and wherein the material of said channel is selected from: a fabric, or a polymeric film, or combinations thereof.

In an embodiment, the layers are bound to the injection-moulding article by press covering, thermoforming, injection, low pressure injection, , among other suitable processes.

In an embodiment, the external layer is a multi-layered decorative material.

In an embodiment, the external layer selected from a list consisting of textiles, unidirectional fabric, such as woven fabric, non-woven fabric, knitted fabric, , textile, composite, polymer; preferably textile laminated or coated, fabric laminated or coated, natural or synthetic leather, in particular all based on synthetic, natural, natural based, recycled materials, and/or combinations thereof.

In an embodiment, the external layer comprises a semi or opaque mask layer.

In an embodiment, the light path extends in the length/wide of all the external layer.

In an embodiment, the thickness of the light source ranges from 0.1 - 50mm.

In an embodiment, the perforations or engravings are obtained by laser, mechanical punctions, needle.

In an embodiment, the spacing between two consecutives perforated and/or engraving is at least 0.1 mm; preferably 0.15 - 10 mm.

In an embodiment, the length of perforations and/or engravings is at least 0.1mm.

In an embodiment, the light source is integrated in the backside of the support layer wherein said support is perforated or engraving or translucid to form an additional light path for guiding the light, wherein all the light paths are substantially aligned for diffusing light.

In an embodiment, the integration of support layer and the light source is obtained by sewing, gluing, adhesiveness, fixation, welding, crimping, or clamping with adhesives.

Another aspect of the present disclosure refers to a lighted multi-layered injection-moulded article for a decorative material in a vehicle interior comprising an external layer comprising a light yarn, preferably a polymeric one obtained by extrusion, sewed and/or embroidered to it wherein said light yarn is selected from a light scattering yarn and/or a light emitting yarn; a support layer wherein the support layer material is selected from a list consisting of: polymeric, composites, non-woven fabric, woven fabric, knitted fabric, unidirectional fabric, foam, or combinations thereof; wherein the light yarn has a linear density ranging from 100 to 2500 dtex; wherein the light yarn is light scattering yarn the multilayer further comprises a light source configured to emit light through the light scattering yarn; wherein the external layer, the support layer are bound to each other in order to the light scattering yarn and/or light emitting yarn are configured to form a light path; wherein the layers are attached to the injection moulded-article.

Another aspect of the present disclosure refers to a lighted multi-layered injection-moulded article for a decorative material in a vehicle interior comprising an external layer comprising a light yarn, preferably a polymeric one obtained by extrusion, sewed and/or embroidered to it wherein said light yarn is selected from a light scattering yarn and/or a light emitting yarn; a support layer wherein the support layer material is selected from a list consisting of: polymeric, composites, non-woven fabric, woven fabric, knitted fabric, unidirectional fabric, foam, or combinations thereof; wherein the light yarn has a linear density ranging from 100 to 2500 dtex; wherein the light yarn is light scattering yarn the multilayer further comprises a light source configured to emit light through the light scattering yarn; wherein the external layer, the support layer are bound to each other in order to the light scattering yarn and/or light emitting yarn are configured to form a light path; wherein the layers are attached to the injection moulded-article; wherein the external layer comprises an overthickness for conduction of the light yarn. This overthickness on the external layer allows a higher light reflection and increases the lightning capacity of the article.

In an embodiment, the light scattering yarn used in the lighted multi-layered injection-moulded article has a linear density ranging from 100 to 2000 dtex; preferably 500 to 1000 dtex.

In an embodiment, the light scattering yarn of the lighted multi-layered injection-moulded article is sewed or embroidered together with the light source. In this case, the light scattering yarn and the light source can be integrated in a single process either in the spool or the bobbin during sewing or embroidering. Therefore, in a single process it is possible to integrate the two wires, allowing to not need any auxiliary processes for the integration of a light source in a wire/fiber format; ensuring that the wires are superimposed in exactly the same place on opposite faces, such as visible light scattering wire, and non-visible, such as wire as light source, like optical fiber, electroluminescent or others.

In an embodiment, the material of the light scattering yarn used in the lighted multi-layered injection-moulded article is selected from a list consisting of: polyolefin, polyamide or mixtures thereof.

In an embodiment, the degree of twisting of the light scattering yarn used in the lighted multi-layered injection-moulded article ranges from 20 to 600 twists/m, preferably from 25 to 200 twists/m, more preferably from 30 to 150 twists/m.

In an embodiment, the light scattering yarn of the lighted multi-layered injection-moulded article is twisted or wrapped around a light emitting yarn with a twist direction S or Z oriented.

In an embodiment, the light source of the lighted multi-layered injection-moulded article is selected from a list consisting of lighting material in the form of fiber, yarn, tape, film, panel that could be of the different technologies such as electroluminescent optical fibre, light-emitting diodes (LEDs), organic light-emitting diode (OLED), quantum dot light-emitting diode (QLED), or combinations thereof or any other suitable light source, which can be integrated within the layers of the multi-layered injection-moulded article.

In an embodiment, the light source of the lighted multi-layered injection-moulded article has a luminous intensity ranging from 10 to 500 cd/m², preferably from 50 to 300 cd/m², more preferably from 100 to 250 cd/m².

In an embodiment, the light source of the lighted multi-layered injection-moulded article is integrated in the back of the external layer or in between the layers of the said multi-layered injection-moulded article.

In an embodiment, the sewing and embroidering patterns and types of stitches and seams of the light scattering yarn or light emitting yarn used in the lighted multi-layered injection-moulded article are selected from a list consisting of: straight, lockstitch, chain stitch, top stitch, baste, running, zig zag, decorative pattern, and other suitable forms, or combinations thereof.

In an embodiment, the integration of support layer and the light source of the lighted multi-layered injection-moulded article is obtained by sewing, gluing, embroidery, adhesiveness, fixation, welding, crimping, clamping with adhesives or laminating.

In an embodiment, the lighted multi-layered injection-moulded article further comprises a mask layer attached to the back of the external layer; preferably wherein said mask layer is opaque or semi opaque.

In an embodiment, the external layer of the lighted multi-layered injection-moulded article is selected from a list consisting of textiles such as woven fabric, unidirectional fabric, knitted fabric, non-woven fabric, textile, composite, polymer or their combinations thereof.

In an embodiment, the layers of the lighted multi-layered injection-moulded article are bound to the injection-moulded article by press covering, thermoforming, injection, low pressure injection, among other suitable processes.

In an embodiment, the light scattering yarn used in the lighted multi-layered injection-moulded article is an extruded polymeric yarn.

In an embodiment, the light emitting yarn material used in the lighted multi-layered injection-moulded article is selected from a list consisting of phosphorescent material, photoluminescent material, electroluminescent material, or combinations thereof.

In an embodiment, the external layer or layers of the lighted multi-layered injection-moulded article comprises perforations configured in order to focus the ambient light on the light emitting yarn.

In an embodiment the lighted multi-layered injection-moulded article comprises an external layer comprising the extruded polymeric light scattering yarn sewed, or embroidered to it; the support layer wherein the support layer material is selected from a list consisting of: non-woven fabric, woven fabric, knitted fabric, unidirectional fabric, foam, or combinations thereof; wherein the extruded polymeric light scattering yarn has a linear density ranging from 100 to 2500 dtex; and the light source configured to emit light through the light scattering yarn; wherein the external layer, the support layer and the light source are laminated in order to the extruded polymeric light scattering yarn is configured to form a light path; wherein the laminated layers are attached to the injection-moulded article.

Another aspect of the present disclosure relates to an article comprising the multi-layered lighted injection-moulded article described in the present disclosure.

Another aspect of the present disclosure relates to article comprising the backlighted multi-layered injection-moulded article described in the present disclosure.

In an embodiment, the article is a vehicle pillar, a vehicle door panel (eg: beltline, insert, armrest, handle and others), a vehicle dashboard, a vehicle ceiling, a vehicle seat, a vehicle steering wheel, a vehicle console, a vehicle glove box compartment, a vehicle trunk door, or a vehicle trunk panel, or baby seat car or a roof, or headliner an electric home appliance.

### BRIEF DESCRIPTION OF THE DRAWINGS

The following figures provide preferred embodiments for illustrating the disclosure and should not be seen as limiting the scope of invention.

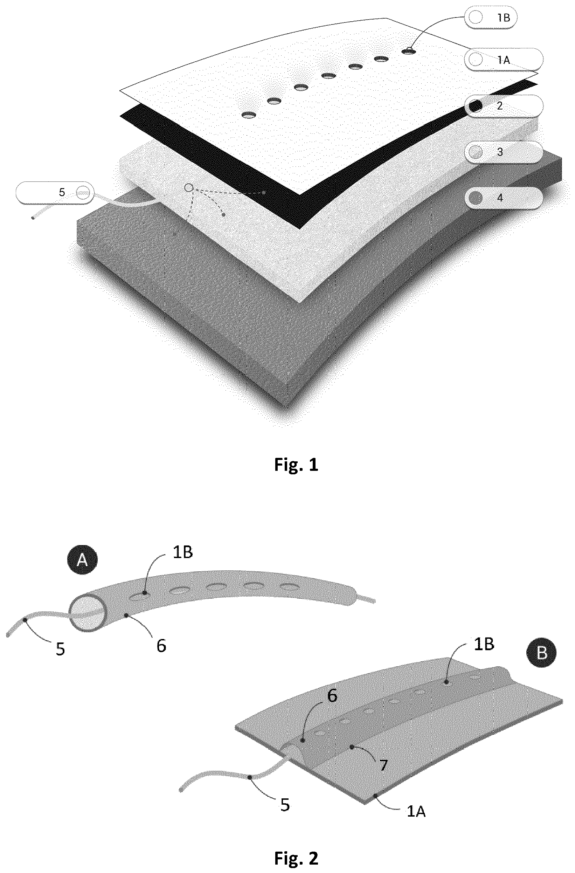

**Figure 1****:** Schematic representation of an embodiment of a multi-layered decorative material (1-3) with an external layer (1A), with a perforation and/or engraving (1B), a mask layer (2) and a support layer (3), its combination with an injection-moulded article (4) and the light source (5).
**Figure 2****:** Schematic representation of an embodiment of a textile/polymeric channel (6) comprising the light source (5). The figure is meant to exemplify different approaches (A and B) for textile/polymeric channel (6) construction and light source (5) integration.

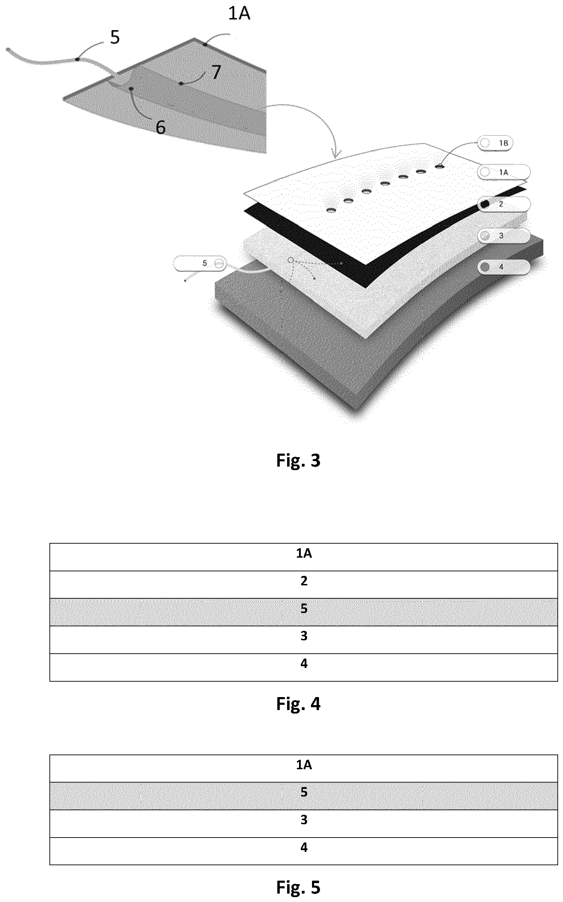

**Figure 3****:** Schematic representation of an embodiment of a textile/polymeric channel (6) comprising the light source (5). The figure is meant to exemplify a different integration of the textile/polymeric channel (6) on the internal side of the external layer (1A).
**Figure 4****:** Schematic representation of an embodiment of a possible combination of the layers that constitute the backlighted multilayered injection-moulded article. The figure is meant to exemplify an embodiment with an external layer (1A), a mask layer (2), a light source (5) and a support layer (3) on top of the injected-moulded article (4).
**Figure 5****:** Schematic representation of an embodiment of a possible combination of the layers that constitute the backlighted multilayered injection-moulded article. The figure is meant to exemplify an embodiment with an external layer (1A), a light source (5), a support layer (3) and on top of the injected-moulded article (4).

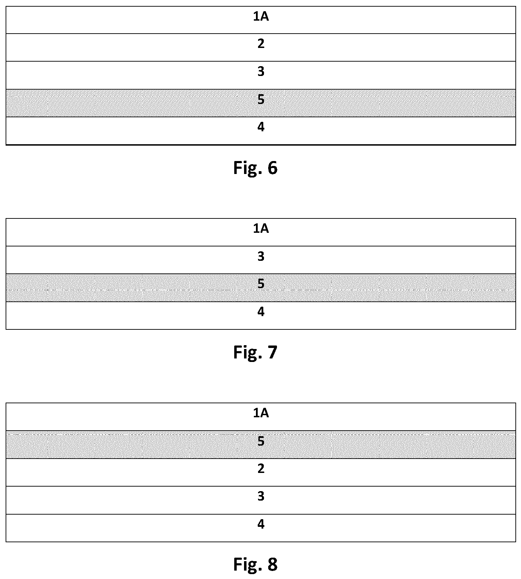

**Figure 6****:** Schematic representation of an embodiment of a possible combination of the layers that constitute the backlighted multilayered injection-moulded article. The figure is meant to exemplify an embodiment with an external layer (1A), a mask layer (2), a support layer (3) and a light source (5) on top of the injected-moulded article (4).
**Figure 7****:** Schematic representation of an embodiment of a possible combination of the layers that constitute the backlighted multilayered injection-moulded article. The figure is meant to exemplify an embodiment with an external layer (1A), a support layer (3) and a light source (5) on top of the injected-moulded article (4).
**Figure 8****:** Schematic representation of an embodiment of a possible combination of the layers that constitute the backlighted multilayered injection-moulded article. The figure is meant to exemplify an embodiment with an external layer (1A), a light source (5), a mask layer (2) and a support layer (3) on top of the injected-moulded article (4).

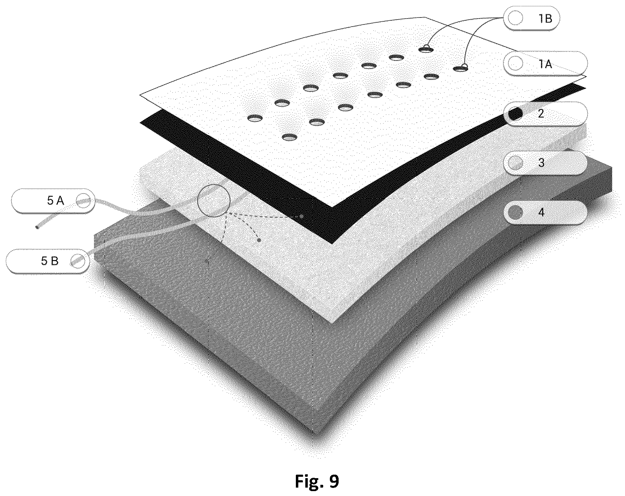

**Figure 9****:** Schematic representation of an embodiment of a multi-layered decorative material (1-3) with an external layer (1A), with a perforation and/or engraving (1B), a mask layer (2) and a support layer (3), its combination with an injection-moulded article (4) and two light sources (5A and 5B) mounted on the layer.

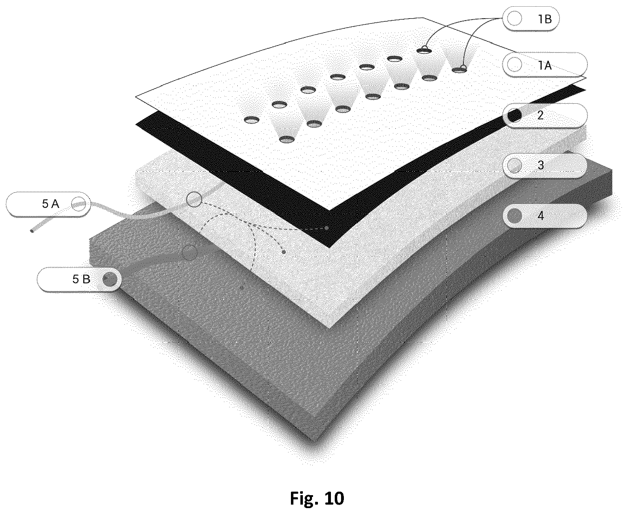

**Figure 10****:** Schematic representation of an embodiment of a multi-layered decorative material (1-3) with an external layers (1A), with a perforation and/or engraving (1B), a mask layer (2) and a support layer (3), its combination with an injection-moulded article (4) and one light source (5A) mounted on the support layer (3) and one light source (5B) mounted on the injection-moulded article (4).

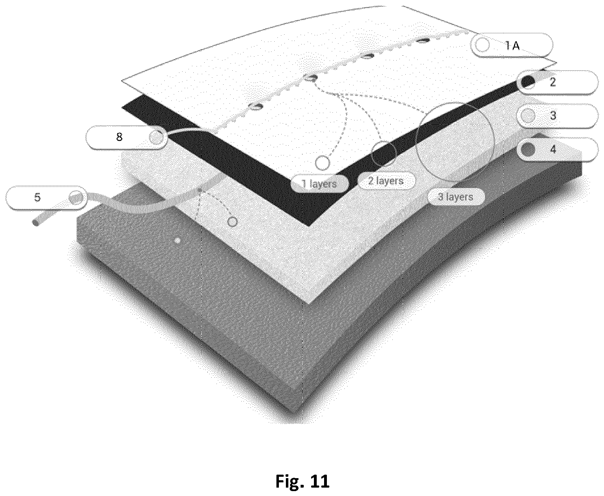

**Figure 11****:** Schematic representation of an embodiment of an injection-moulded article (4) with an external layer (1A) with perforations and/or engravings, a mask layer (2) and a support layer (3), its combination with an injection-moulded article (4), a light source (5) and a light scattering yarn (8), in which the light source (5) and the light scattering yarn (6) are integrated in different locations of the laminate.

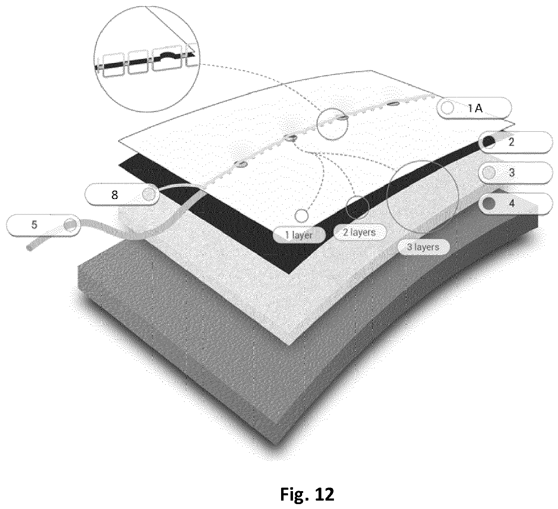

**Figure 12****:** Schematic representation of an embodiment of an injection-moulded article (4) with an external layer (1A) with perforations and/or engravings, a mask layer (2) and a support layer (3), its combination with an injection-moulded article (4), a light source (5) and a light scattering yarn (8), in which the light source (5) and the light scattering yarn (6) are integrated simultaneously during a one-shot sewing process.

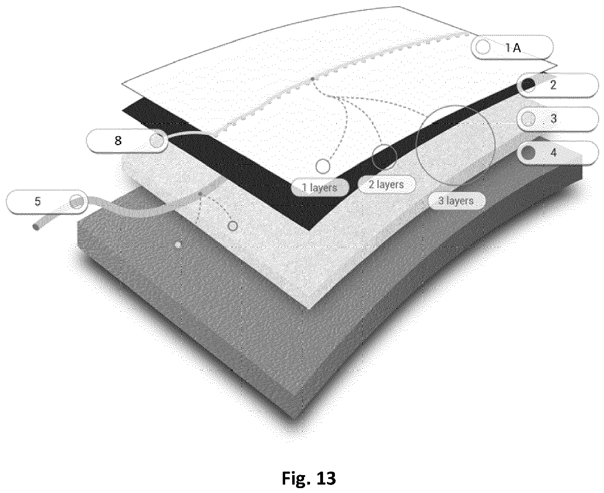

**Figure 13****:** Schematic representation of an embodiment of an injection-moulded article (4) with an external layer (1A), a mask layer (2) and a support layer (3), its combination with an injection-moulded article (4), a light source (5) and a light scattering yarn (6), in which the light source (5) and the light scattering yarn (8) are integrated in different locations of the laminate.

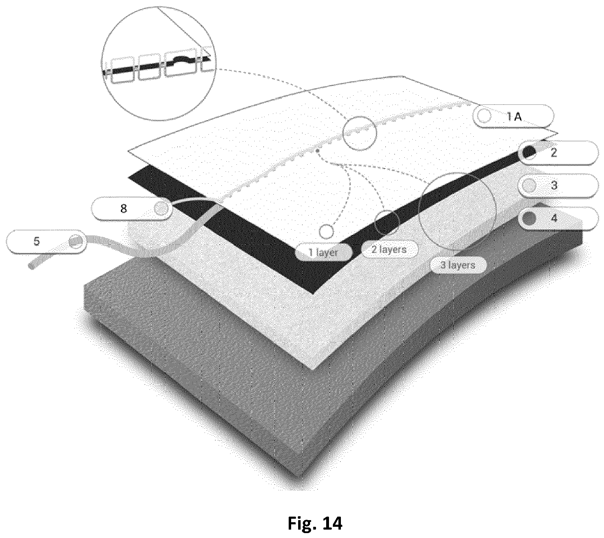

**Figure 14****:** Schematic representation of an embodiment of an injection-moulded article (4) with an external layer (1A), a mask layer (2) and a support layer (3), its combination with an injection-moulded article (4), a light source (5) and a light scattering yarn (8), in which the light source (5) and the light scattering yarn (6) are integrated simultaneously during a one-shot sewing process.

Throughout the figures indicated above, the following elements are indicated with the respective references:
- 1A -: external layer;
- 1B -: perforation and/or engraving;
- 2 -: mask layer;
- 3 -: support layer;
- 4 -: injection-moulded article;
- 5 -: light source;
- 6 -: textile/polymeric channel;
- 7 -: union between textile/polymeric channel and the layer;
- 8 -: light scattering yarn.

### DETAILED DESCRIPTION

This invention relates to a backlighted multi-layered injection-moulded article with a sewing-like aspect, a lighted multi-layered injection-moulded article for a decorative material, his manufacturing process and use.

The backlighted multi-layered injection-moulded article with a sewing-like aspect provides a luminous decorative sewing-like effect in the vehicle interior component by means of backlighting a set of sewing-like perforations and/or engravings to resemble an illuminated sewing, decorative and functional effects. This backlighted light is connected to a light source (5) or power supply in order to present a luminous effect.

In different embodiments, the light source (5) can be either light-emitting diodes (LED) stripes, electroluminescent fibres/yarns or tapes, optical fibres, organic light-emitting diode (OLED) stripe or combinations thereof. Any other suitable light sources (5) can also be used, which can be integrated in the back, into or moulded between the layers of the multi-layered injection-moulded article.

In this now disclosed invention, the light source (5) and the sewing-like perforations and/or engravings are substantially aligned in order to promote passage of light from the back to the front of the multi-layered injection-moulded article.

In an embodiment, said sewing-like perforations and/or engravings are made across the total thickness of the backlighted multi-layered injection-moulded article creating a visible surface with decorative perforations that allow passage of light.

In an embodiment, said sewing-like perforations and/or engravings are made in at least one layer of the multi-layered injection-moulded article.

In an embodiment, sewing-like perforations or engravings can assume different geometries and designs to resemble a sewed component. The perforations or engravings can be made using laser, mechanical punctions, needles or any other suitable method.

In an embodiment, the spacing between two consecutives perforated and/or engravings of the multi-layered injection-moulded article is at least 0.1 mm, being preferably 0.15 - 10 mm.

In one of the embodiments of the manufacturing process, sewing-like perforations and/or engravings in the backlighted multi-layered injection-moulded article can be performed in a way that allows the light source (5) to be passed through the perforations and or engravings and provide a sewing-like aspect.

In an embodiment, these sewing-like perforations and/or engravings are combined with integration of light sources (5), in order to create different backlighting visual effects.

In an embodiment, the thickness of the light source (5) ranges from 0.1 - 50 mm.

The backlighted multi-layered injection-moulded article with a sewing-like aspect can be processed for a vehicle interior component or injection-moulded article (4) by means of press covering, thermoforming, injection moulding, like injection, low pressure, over moulding or other suitable moulding processes, among other suitable processes.

In an embodiment, the mentioned backlighted multi-layered injection-moulded article with a sewing-like aspect where the light source (5) is integrated comprise a external layer (1A), which can be made of textile, composite, polymer, synthetic or natural leather, or their combination and/or any other suitable material, a support layer (3) (textile or not textile), interlayer adhesives and other suitable functional layers. In different embodiments, this external layer (1A) could be textiles, such as unidirectional fabric, woven fabric, knitted fabric, non-woven fabric, textile, composite, polymer; preferably a textile/fabric laminated or coated, natural or synthetic leather, all based on synthetic, natural, natural based, recycled materials, and/or combinations thereof. In different embodiments, this support layer (3) could be textile such as woven, knitted, non-woven fabric, not textile such as polymeric foam, both based on synthetic, natural, natural based or recycled material, and/or combinations thereof.

In an embodiment of the present invention, the backlighted multi-layered injection-moulded article comprises a perforated/engraved support layer (3), a perforated/engraved semi-opaque/opaque mask layer (2) and a perforated/engraved external layer (1A).

In an embodiment of the present invention, the backlighted multi-layered injection-moulded article comprises a non-perforated support layer (3), a perforated/engraved semi-opaque/opaque mask layer (2) and a perforated /engraved external layer (1A).

In an embodiment of the present invention, the backlighted multi-layered injection-moulded article comprises a non-perforated support layer (3), a perforated/engraved semi-opaque/opaque mask layer (2) and a non-perforated/engraved translucent external layer (1A).

In an embodiment of the present invention, the backlighted multi-layered injection-moulded article comprises a non-perforated support layer (3), a perforated/engraved semi-opaque/opaque mask layer (2) and a non-perforated/engraved external layer (1A).

In an embodiment of the present invention, the backlighted multi-layered injection-moulded article comprises a perforated/engraved support layer (3), and a non-perforated/engraved external layer (1A).

In an embodiment of the present invention, the backlighted multi-layered injection-moulded article comprises a perforated/engraved support layer (3), and a perforated/engraved external layer (1A).

In an embodiment of the present invention, the backlighted multi-layered injection-moulded article comprises a non-perforated/engraved support layer (3), and a perforated/engraved external layer (1A).

This invention presents the integration of a light source (5) in a technical component or in the aforementioned multi-layered injection-moulded article.

In an embodiment, the light source (5) can incorporate at least one light source (5) and the different possible place(s) for its integration in backlighted multi-layered injection-moulded article.

In an embodiment of the present invention, the light source (5) is integrated in predetermined locations of the injection-moulded article either by gluing/adhesives, fixation, welding, crimping, clamping or in groove, cavity, hollow within, back or in surface of the component.

In an embodiment of the present invention, the light source (5) is integrated in the support layer (3) combined by sewing, gluing/adhesiveness, fixation, welding, crimping, clamping with adhesives, and optionally using a perforated or/and engraved groove/cavity/hollow in order to accommodate/protect and guide the light source.

In an embodiment of the present invention, the light source (5) is integrated in the backside of the semi-opaque and/or opaque mask layer (2) either by sewing, gluing/adhesiveness, fixation, welding, crimping, clamping.

In an embodiment of the present invention, the light source (5) is integrated in the internal face of the external layer (1A) either by sewing, gluing/ adhesiveness, fixation, fixation, welding, crimping, clamping.

In an embodiment, the light source (5) can be directly integrated into the multi-layered injection-moulded article or into the interior technical component. Alternatively, the light source (5) can be inserted inside a textile/polymeric channel (6) prior and during to integration in the multi-layered injection-moulded article or technical component.

In an embodiment, the textile/polymeric channel (6) comprising the light source (5) can be integrated by sewing or gluing with adhesives in different layers of the multi-layered decorative laminate or technical component.

In an embodiment, the textile/polymeric channel (6) can be either translucent to allow transmission of light or a perforated opaque layer to allow passage of light in localized areas of the light source (5).

In an embodiment, the technical component can be either opaque, reflective or with selected colour to promote the transmission light in the direction of the perforated/engraved layer of the multi-layered injection-moulded article.

In an embodiment, the backlighted decorative and functional material comprises electronic and electric systems, such as monitoring/local control hardware, for electroluminescent yarns or tapes, LED stripes, optical fibres or any other component.

In an embodiment, this multi-layered injection-moulded article can be applied to some vehicle parts, such as, for example, door panels, dashboards, console, ceiling, pillars, seats, steering wheel or any other vehicle interior trim.

In an embodiment, the external layer (1A) is selected from a list consisting of textiles selected from a list consisting of unidirectional fabric, woven fabric, non-woven fabric, knitted fabric, non-woven fabric, textile, composite, polymer, textile laminated or coated, natural or synthetic leather, all based on synthetic, natural, natural based, recycled materials, and/or combinations thereof.

In an embodiment, the mask layer (2) is selected from a list consisting of any opaque material, textile, non-textile, plastic films, and/or combinations thereof.

In an embodiment, the support layer (3) is selected from a list consisting of textiles as non-woven fabric, woven fabric or knitted fabric; or foam; preferably materials based on synthetic, natural, natural based or recycled materials or combinations thereof.

In an embodiment, the textile/polymeric channel (6) is selected from a list consisting of a fabric, or a polymeric film, or combinations thereof.

In an embodiment, the injected-moulded article (4) is a composite, polymeric or combinations thereof.

The lightning yarn used in the lighted multi-layered injection-moulded article provide illuminated features, also known as decorative and functional stitching, for example in vehicle interior components, by means of light-emitting yarns or light-scattering yarns with a coupled light source. The light emitting yarns or light-scattering yarns used in this illumination system can be integrated, for example in vehicle interior components by sewing, embroidery, or any other suitable methods, without loss of functional lighting characteristics and increase of a new type of presentation of decorative materials inside a vehicle interior. This illumination system is connected to a light source or power supply in order to present luminous effect.

In an embodiment, the light source of the lighted multi-layered injection-moulded article is selected from a list consisting of lighting material in the form of fiber, yarn, tape, film, panel that could be of the different technologies such as electroluminescent optical fibre, light-emitting diodes (LEDs), organic light-emitting diode (OLED), quantum dot light-emitting diode (QLED), or combinations thereof, or any other suitable light source, which can be integrated within the layers of the multi-layered injection-moulded article.

This lightning scattering yarns provide new ambient moods for vehicle interiors and luxury feel for the occupants along with a degree of personalization and/or safety/warning functionalities.

In an embodiment, this light scattering yarns are applied to the lighted multi-layered injection-moulded article that can be applied to some vehicle parts, such as, for example, door panels, vehicle beltline, vehicle inserts, vehicle handle, armrest, dashboards, console, ceiling, pillars, seats, steering wheel, glove box compartment, trunk door, trunk panel or any other vehicle interior trim, a baby seat car or a roof, or headliner, or an electric home appliance. This appliance is obtained through the integration by sewing, embroidery, gluing, laminating, or any other suitable method of the lightning scattering yarns into a decorative material.

In different embodiments, these decorative materials could be textiles, such as woven, knitting, non-woven fabrics, or any other suitable textile, textile laminated or coated, based on synthetic, natural, natural based or recycled, and/or combinations between textiles and textile laminated or coated with or without foams, that can be textiles or any other suitable foam, or composite materials or polymeric materials or their combinations thereof.

In an embodiment, the mentioned multi-layered injection-moulded article where the light scattering yarns are integrated comprise a surface layer, which can be made of textile, polymer, composite or any other suitable material, a foam layer, interlayer adhesives and other suitable functional layers. In a further embodiment, the multi-layered injection-moulded article include a mask layer attached to the back of the external layer, preferably wherein said mask layer is opaque or semi opaque in order to promote better concentration of light to pass through the light scattering yarn.

The light scattering yarns used are capable of withstanding the mechanical stresses applied during the integration process without loss of lighting properties.

In different embodiments, the light scattering yarns used present different colours, depending on the chosen luminous technology and the functional/decorative effects to be displayed in the vehicle interior. These different embodiments result from a specific light source that can be chosen to display different colours or by the twisting of yarns with different compositions that led to different colors.

In different embodiments, the light scattering yarns are integrated considering different sewing and embroidering patterns and types of stitches and seams, such as straight, lockstitch, chain stitch, top stitch, baste, running, zig zag, decorative, among any other suitable sewing pattern. These sewing patterns can also present different designs and geometrical properties, such as spacing, width, density, length, or any other desired design.

An embodiment considers that the light scattering yarn and the light source can be integrated by sewing, embroidering or any suitable process, with different type of stich and seams, simultaneously in a one-shot process.

The lighted multi-layered injection-moulded article with the light scattering yarn and the injection-moulded article, which can be made of polymer, composite or any combination thereof, can be processed into a vehicle interior component by means of press covering, thermoforming, overmoulding, injection, among other suitable processes.

In an embodiment, the lighting scattering yarn can be applied to some vehicle parts, such as, vehicle pillar, a vehicle door panel, a vehicle beltline, a vehicle insert, a vehicle door, a vehicle armrest, a vehicle dashboard, a vehicle ceiling, a vehicle seat, a vehicle steering wheel, a vehicle console, a vehicle instrument panel, a vehicle glove box compartment, a vehicle trunk door, or a vehicle trunk panel, or a baby seat car, or a roof, or headliner, or an electric home appliance.

In an embodiment, the lighting scattering yarn for vehicle interior comprises light scattering yarns, which are composed of twisted polyolefin-based fibers and polyamide-based fibers. In such embodiments, the light scattering yarns are integrated by sewing, embroidery, gluing, laminating into a decorative material. These light scattering yarns are capable of withstanding the mechanical stresses applied during the integration process without loss of light scattering properties.

In an embodiment, the light scattering yarns are multifilament yarns with a linear density ranging from 100 to 2500 dtex, preferably ranging from 100 to 2000 dtex and even more preferably from 500 to 1000 dtex with a degree of twisting ranging from 20 to 600 twists/m, preferably from 25 to 200 twists/m, more preferably between 30 and 150 twists/m. Alternatively, the light scattering yarn can be arranged in order to cover/wrap the light emitting yarn by twisting around the said light emitting yarn. The S and Z oriented twist directions can be considered to improve the mechanical characteristics.

In an embodiment, the light scattering yarns can be mixed with colored filaments in order to provide aesthetical properties. Mixture with filaments, either coloured or not coloured, can also act as reinforcement for the mechanical properties of the light scattering yarn.

In an embodiment, the light scattering yarns are combined with a light source resulting for example in light scattering yarns in the visible surface and the light source in the back/inside the laminate.

In an embodiment, the light scattering yarns are combined with translucid yarns during sewing process, resulting for example in light scattering yarns in the visible surface and translucid yarns in the back/inside the laminate. Combination with lighting yarns such as optical fiber or other is also possible to obtain light scattering yarns in the visible surface and lighting yarns in the back/inside the laminate.

In an embodiment, the light source comprises electronic and electric systems, such as monitoring/local control hardware, for electroluminescent, light-emitting diodes, organic light-emitting diode, quantum dot light-emitting diode, optical fibers or any other combinations thereof. In a further embodiment, the light-emitting diode stripes comprise the serigraph printing of conductive ink, where the light-emitting diode is coupled by means of an adhesive.

In an embodiment, the electroluminescent light source comprises the serigraph printing of four different layers of ink, wherein two electrodes are comprised of conductive materials, wherein one of them shall be transparent, one dielectric material and one semi-conductive material comprised of phosphoric inks, in flexible substrates.

The resulting light source that comprises the lightning yarn can be integrated in the back of a multi-layered injection-moulded article or in between the layers of the aforementioned multi-layered injection-moulded article. In a further embodiment, the light source can also be integrated in the injection-moulded article in predetermined locations by gluing, adhesiveness, fixation with tape, welding, crimping, clamping with adhesives, fit, or within the injection-moulded article.

Other aspect of the invention, is that the light source is integrated exactly below the stitched light scattered yarn in order to promote the maximum passage of light from the back to the front of the decorative material.

In an embodiment, figure 1 shows a schematic representation of an embodiment of a multi-layered decorative material (layers 1 to 3) moulded with an external layer (1A), with a perforation and/or engraving (1B), a mask layer (2) and a support layer (3) , its combination with an interior technical component or injection-moulded article (4) and the light source (5). The external layer (1A) represents an exterior decorative material which can be made of textile, textile based, textile composite, polymer, synthetic or natural leather, or combinations thereof and any other suitable material, and can be perforated and/or engraved or not. The layer with the perforation and/or engraving (1B) represents the perforations and/or engravings which can present different designs in order to resemble different sewing patterns. The mask layer (2) represents a perforated semi-opaque and/or opaque mask layer (2) which can be introduced optionally in the exterior decorative textile material, either on back or front side, in order to promote light transmission in desired areas. The support layer (3) represents a layer that can act as a layer for light diffusion and add soft touch properties to the vehicle interior component; this support layer (3) could be perforated and/or engraved to promote light transmission and can be perforated and/or engraved to integrate/protect/accommodate the light source (5). Finally, the support layer (3) can be either translucent, semi opaque or opaque. In the cases where the support layer (3) is semi-opaque or opaque, it could replace the mask layer (2).

Figure 2 shows a schematic representation of an embodiment of a textile/polymeric channel (6) comprising the light source (5). The figure is meant to exemplify different approaches for textile/polymeric channel (6) construction and light source (5) integration. In the approach A), it is represented a closed textile/polymeric channel (6) comprising the light source (5), presenting perforations (1B) that can be included in order to promote the passage of light in desired sections of the channel (6). Alternatively, the closed textile/polymeric channel (6) can be translucid, allowing transmission of light through all surface of the textile/polymeric channel (6) which eliminates the need for perforations (1B). In the approach B), it is represented a closed textile/polymeric channel (6) comprising the light source (5), attached to an external layer (1A) of the multi-layered decorative material either by sewing, gluing, welding or adhesives.

In an embodiment, figure 3 shows a schematic representation of an embodiment of a textile/polymeric channel (6) comprising the light source (5). In this embodiment, the integration of the textile/polymeric channel (6) is done on the internal side of the external layer (1A). The light source (5) can be included in different layers, for example, between the external layer (1A) and the mask layer (2), between the external layer (1A) and the support layer (3), between the support layer (3) and the injection-moulded article (4), or any other suitable rearrangement between the light source (5) and the different layers of the backlighted multilayered injection-moulded article with a sewing-like aspect. In any of this combinations, more than one light source (5) can be used.

In an embodiment, figure 4 shows a schematic representation of an embodiment of a possible combination of the layers that constitute the backlighted multilayered injection-moulded article. The figure is meant to exemplify an embodiment with an external layer (1A), which can be perforated or engraving or translucid, a mask layer (2), which can be perforated or not, a light source (5) which can be optionally within a textile/polymeric channel (6), and a support layer (3) on top of the injected-moulded article (4).

In an embodiment, figure 5 shows a schematic representation of an embodiment of a possible combination of the layers that constitute the backlighted multilayered injection-moulded article. The figure is meant to exemplify an embodiment with an external layer (1A), which can be perforated or engraving or translucid, a light source (5) which can be optionally within a textile/polymeric channel (6), a support layer (3) and on top of the injected-moulded article (4).

In an embodiment, figure 6 shows a schematic representation of an embodiment of a possible combination of the layers that constitute the backlighted multilayered injection-moulded article. The figure is meant to exemplify an embodiment with an external layer (1A), which can be perforated or engraving or translucid, a mask layer (2) which can be perforated or not, a support layer (3) and a light source (5) on top of the injected-moulded article (4).

In an embodiment, figure 7 shows a schematic representation of an embodiment of a possible combination of the layers that constitute the backlighted multilayered injection-moulded article. The figure is meant to exemplify an embodiment with an external layer (1A), which can be perforated or engraving or translucid, a support layer (3), a light source (5) which can be optionally within a textile/polymeric channel (6) on top of the injected-moulded article (4).

In an embodiment, figure 8 shows a schematic representation of an embodiment of a possible combination of the layers that constitute the backlighted multilayered injection-moulded article. The figure is meant to exemplify an embodiment with an external layer (1A) which can be perforated or engraving or translucid, a light source (5) which can be optionally within a textile/polymeric channel (6), a mask layer (2) and a support layer (3) on top of the injected-moulded article (4).

In an embodiment, figure 9 shows a schematic representation of an embodiment of a multi-layered decorative material (1-3) with an external layer (1A), with a perforation and/or engraving (1B), a mask layer (2) and a support layer (3), its combination with an injection-moulded article (4) and two light sources (5A and 5B). These two light sources (5A and 5B) can be in the same layer or in different layers.

Figure 10 shows Schematic representation of an embodiment of a multi-layered decorative material (1-3) with an external layer (1A), with a perforation and/or engraving (1B), a mask layer (2) and a support layer (3), its combination with an injection-moulded article (4) and one light source (5A) mounted on the support layer (3) and one light source (5B) mounted on the injection-moulded article (4). The light sources (5A and 5B) can be of different type.

In an embodiment, Figure 11 shows a schematic representation of an embodiment of a multi-layered injection-moulded article with an external layer (1A) with perforations and/or engravings, a mask layer (2) and a support layer (3), its combination with an injection-moulded article (4), a light source (5) and a light scattering yarn (8). As can be seen on this figure, the light source (5) can be integrated on top of the support layer (3) or on top of the injection-moulded article (4). The light scattering yarn (8) can be integrated in several combinations of layers, such as over the external layer (1A), on top of the mask layer (2), if present, since this mask layer (2) is optional and on top of the support layer (3). The external layer (1) can comprise a semi or opaque mask layer to align the light path into the perforations or engravings of the external layer (1). In this Figure 11, we can also see the illustration of a possible increased perforations on the external layer (1A) to enhance the passage of light.

In one embodiment, the light scattering yarn (8) can be responsible only for the light diffusion, so that is this case, it always needs a separate light source (5). Alternatively, the light scattering yarn (8) can be sewed or embroidered together with the light source (5), being said light source (5) selected from a list consisting of electroluminescent optical fibre, light-emitting diodes (LEDs), organic light-emitting diode (OLED), quantum dot light-emitting diode (QLED) or combinations thereof and present several shapes such as fiber, yarn, tape, panel, or others.

In an embodiment, Figure 12 shows a schematic representation of an embodiment of a multi-layered injection-moulded article with an external layer (1A) with perforations and/or engravings, a mask layer (2) and a support layer (3), its combination with an injection-moulded article (4), a light source (5) and a light scattering yarn (8). As can be seen on this figure, the light source (5) can be integrated on top of the mask layer (2). The light scattering yarn (8) can be integrated in several combinations of layers, such as over the external layer (1) or on top of the mask layer (2). The external layer (1) can comprise a semi or opaque mask layer to align the light path into the perforations or engravings of the external layer (1).

In an embodiment, Figure 13 shows a schematic representation of an embodiment of a multi-layered injection-moulded article with an external layer (1A), a mask layer (2) and a support layer (3), its combination with an injection-moulded article (4), a light source (5) and a light scattering yarn (8). As can be seen on this figure, the light source (5) can be integrated on top of the support layer (3) or on top of the injection-moulded article (4). The light scattering yarn (8) can be integrated in several combinations of layers, such as over the external layer (1A), on top of the mask layer (2), if present, since this mask layer (2) is optional and on top of the support layer (3). The external layer (1A) can comprise a semi or opaque mask layer to align the light path to the external layer (1A) to give a sewing-like aspect to the said external layer (1A).

In an embodiment, Figure 14 shows a schematic representation of an embodiment of a multi-layered injection-moulded article with an external layer (1A), a mask layer (2) and a support layer (3), its combination with an injection-moulded article (4), a light source (5) and a light scattering yarn (8). As can be seen on this figure, the light source (5) can be integrated on top of the mask layer (2). The light scattering yarn (8) can be integrated in several combinations of layers, such as over the external layer (1), on top of the mask layer (2), if present, since this mask layer (2) is optional and on top of the support layer (3). The external layer (1A) can comprise a semi or opaque mask layer to align the light path to the external layer (1A) to give a sewing-like aspect to the said external layer (1A).

In an embodiment, production of the multilayered injection-moulded article is made by a lamination process that joins the several layers. The exterior decorative material can be made of textile, textile based, textile composite, polymer, synthetic or natural leather, or combinations thereof and can be laminated with an semi-opaque/opaque layer and an inner support layer (3), consisting of textiles as foam, nonwoven, woven or knitted fabrics, or combinations thereof, using adhesives, such as films, webs, nets, glues, or other suitable adhesive processes and combinations thereof, in a set of temperature, time and pressure parameters, according to the recommendations of the adhesive manufacturer. The perforations and/or engravings may occur in different substrates depending on the desired final aspect and function of the vehicle component. If the exterior decorative material is opaque, perforations can be made in this single material. Alternatively, perforations or engravings can be made in the aggregate "exterior layer + semi-opaque/opaque layer" or the full set "exterior layer + semi-opaque/opaque layer + back layer/support layer".

In an embodiment, the integration of the light source (5) in the multilayer injection-moulded article can be made by different methods and in different locations Integration in the support layer (3) can be made by fixing the light source (5) in the surface of said support layer (3) by gluing, adhesives, stitching, welding, crimping, clamping or other, or by creating a small groove, cavity in the support layer (3) that can accommodate/protect and guide the light source (5) in the right position. Combination of groove and fixation of the light source (5) is also possible. Light source (5) can also be integrated in the external layer (1A) or the laminate "exterior layer + opaque layer". This integration can take place by gluing, adhesive tape, or other methods.

In an embodiment for better results, care must be taken to ensure the light source (5) and the perforations and/or engravings in the backlighted multilayered injection-molded article are substantially coincident in order to promote a good light transmission.

In an alternatively embodiment, the light source (5) can also be integrated in the backlighted multilayered injection-moulded article either by fixation by gluing, adhesive tape or other methods, or creating a groove, hollow, or any other aperture type in the backlighted injection-molded article that should accommodate the light source. In an embodiment, when the multilayered decorative material (1-3) integrates the light source (5), then it is used to cover the technical component. Otherwise, the multilayered decorative material (1-3) will not integrate the light source (5), especially if said light source (5) is positioned in the injected-moulded article.

In other embodiment, the light source (5) can be inserted inside a textile/polymeric channel (6) prior the backlighted multi-layered injection-moulded article production. The textile/polymeric channel (6) can be integrated by sewing or gluing, with adhesives welding, either by high-frequency, ultrasound or other suitable welding process, crimping, or other suitable methods in different layers of the backlighted multi-layered injection-moulded article or in the technical component.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. A backlighted multi-layered injection-moulded article with a sewing-like aspect comprising:
an external layer wherein said external layer is perforated, or engraved or translucid to form a light path for diffusing light;
at least a light source wherein the light source is selected from a list consisting of electroluminescent yarn/fibre or tape or film or panel, optical fibre, light-emitting diodes (LEDs) stripe; organic light-emitting diode (OLED) stripe, quantum dot light-emitting diode stripe, or combinations thereof;
wherein the previous layers are laminated, and the light source is substantially aligned with the light path for diffusing light in order to form a sewing-like aspect and preferably located on the backside of the multi-layered injection-moulded article;
wherein the laminated layers have been attached to injection-moulding article;
wherein the external layer comprises an overthickness for conduction of the light source.

2. The backlighted multi-layered injection-moulded article according to the previous claim, comprising a support layer wherein the material of the support layer is selected from a list consisting of non-woven fabric, woven fabric; knitted fabric, foam; or combinations thereof.

3. The backlighted multi-layered injection-moulded article according to any of the previous claims, further comprising an adhesive layer between the layers.

4. The backlighted multi-layered injection-moulded article according to any of the previous claims, further comprising a mask layer under the external layer wherein said mask is perforated or engraving or translucid to form an additional light path for guiding the light, wherein all the light paths are substantially aligned for diffusing light.

5. The backlighted multi-layered injection-moulded article according to any of the previous claims, wherein the light source is inserted inside a channel, wherein said channel is attached to the mask or to the internal face of the external layer, wherein the channel is perforated or engraved or translucid to form an additional light path for guiding the light and wherein the material of said channel is selected from: a fabric, or a polymeric film, or combinations thereof.

6. The backlighted multi-layered injection-moulded article according to any of the previous claims, wherein the layers are bound to the injection-moulding article by press covering, thermoforming, injection, low pressure injection, among other suitable processes.

7. The backlighted multi-layered injection-moulded article according to any of the previous claims wherein the external layer is a multi-layered decorative material.

8. The backlighted multi-layered injection-moulded article according to any of the previous claims wherein the external layer comprises a semi or opaque mask layer.

9. A lighted multi-layered injection-moulded article for a decorative material comprising an external layer comprising a light yarn sewed and/or embroidered to it wherein said light yarn is selected from a light scattering yarn and/or a light emitting yarn;
a support layer wherein the support layer material is selected from a list consisting of:
polymeric, composites, non-woven fabric, woven fabric, knitted fabric, unidirectional fabric, foam, or combinations thereof;
wherein the light yarn has a linear density ranging from 100 to 2500 dtex;
wherein the light yarn is light scattering yarn, the multilayer further comprise a light source configured to emit light through the light scattering yarn;
wherein the external layer, the support layer are bound to each other in order to the light scattering yarn and/or light emitting yarn are configured to form a light path;
wherein the layers are attached to the injection-moulded article;
wherein the external layer comprises an overthickness for conduction of the light yarn.

10. The lighted multi-layered injection-moulded article according to the previous claim wherein the light scattering yarn has a linear density ranging from 100 to 2000 dtex; preferably 500 to 1000 dtex.

11. The lighted multi-layered injection-moulded article according to any of the previous claims 9 and 10, wherein the material of the light scattering yarn is sewable, prefereably polymeric and even more preferably selected from a list consisting of: polyolefin, polyamide, or mixtures thereof.

12. The lighted multi-layered injection-moulded article according to any of the previous claims 9 to 11, wherein the sewing and embroidering patterns and types of stitches and seams of the light scattering yarn or light emitting yarn are selected from a list consisting of: straight, lockstitch, chain stitch, top stitch, baste, running, zig zag, decorative pattern, or combinations thereof.

13. The lighted multi-layered injection-moulded article according to any of the previous claims 9 to 12, further comprising a mask layer attached to the back of the external layer; preferably wherein said mask layer is opaque or semi opaque.

14. The lighted multi-layered injection-moulded article according to any of the previous claims 9 to 13, wherein the layers are bound to the injection-moulded article by press covering, thermoforming, injection, low pressure injection, among other suitable processes.

15. The lighted multi-layered injection-moulded article according to any of the previous claims 9 to 14, wherein the light scattering yarn is sewed or embroidered together with the light source.

16. The lighted multi-layered injection-moulded article according to any of the previous claims 9 to 15, wherein the external layer comprises perforations configured to focus the ambient light on the light emitting yarn.

17. An article comprising the backlighted multi-layered injection-moulded article or the multi-layered lighted injection-moulded article described in any of the previous claims.

18. The article according to previous claim wherein the article is vehicle pillar, a vehicle door panel, a vehicle door, a vehicle armrest, a vehicle console, a vehicle instrument panel, a vehicle glove box compartment, a vehicle trunk door, or a vehicle trunk panel, or baby seat car or an electric home appliance.
